# EUROPEAN PATENT APPLICATION

(11) **EP 2 551 708 A1**
(43) Date of publication of application: **30.01.2013**
(21) Application number: 11175381.0
(22) Date of filing: 26.07.2011
(51) Int. Cl.: G02B 6/44, H02G 15/007

(54) **Clamp terminal comprising adaptor and kit for assembling clamp terminal comprising adaptor**

(71) Applicant: Tyco Electronics Raychem BVBA, 3010 Kessel-Lo (BE)
(72) Inventor: Wandels, Jean-Pierre, 3473 Waanrode (BE)
(74) Representative: Grünecker, Kinkeldey, Stockmair & Schwanhäusser

(57) **Abstract**

The invention relates to a clamp terminal (1) comprising an adaptor device (12). Moreover, the invention relates to a kit for assembling a clamp terminal (1) comprising an adaptor device (12). Clamp terminals (1) for clamping a strength member (14) of a cable (17), having a basically prismatic receptacle (4) the receptacle (4) extending in a longitudinal direction open at at least one proximal end situated in the longitudinal direction, having a clamping member (8) the clamping member (8) being adapted to be moved in a clamping direction perpendicular to the longitudinal direction to a clamping position, in which the clamping member (8) is located within the receptacle (4), and having a clamping space being defined in the clamping position between the clamping surface of the clamping member (8) and an inner surface of the receptacle are known from the prior art. However, these clamp terminals (1) cannot be used safely with smaller diameters of a strength member (14). The invention provides an adaptor device (12) that allows to safely use smaller strength members (14) with these clamp terminals (1). The adaptor device (12) limits the space available to the strength member (14) by providing guiding surfaces (18) facing the clamping member (8).

## Description

The invention relates to a clamp terminal for a strength member of a cable, the clamp terminal comprising an adaptor. Moreover, the invention relates to a kit for assembling a clamp terminal comprising an adaptor.

Clamp terminals for clamping a strength member of a cable, having a basically prismatic receptacle the receptacle extending in a longitudinal direction open at at least one proximal end situated in the longitudinal direction, having a clamping member the clamping member being adapted to be moved in a clamping direction perpendicular to the longitudinal direction to a clamping position, in which the clamping member is located within the receptacle, and having a clamping space being defined in the clamping position between the clamping surface of the clamping member and an inner surface of the receptacle are known from the prior art.

For example, a so-called UCT SM connector available from the applicant connects the strength member of a fibre optic cable to a mechanically stable part of a counter-connector. The strength member serves to take up the mechanical stress of a cable, thereby minimising the mechanical load applied to the other members of the cable such as the optical fibres themselves.

The known type of clamp terminal is optimised for a certain diameter of the strength member to be inserted into the clamp terminal. Using a smaller strength member, e.g. smaller than 2 mm, in a clamp terminal designed for a thicker strength member is not safe, as the smaller strength member might slip out of the clamping space between the clamping member and the receptacle during or even after clamping. This might result in a sudden mechanical stress applied to other connected wires, for example optical fibres, causing ripping of those and damaging the whole structure. Consequently, if small diameters of strength members are to be used, smaller clamp terminals have to be supplied, making it necessary to produce and keep different sizes in stock.

Hence, the object of the present invention is to provide an adaptor device that makes it possible to safely use one type of clamp terminal with different diameters of strength members.

The object is achieved by the present invention by providing an adaptor device, the adaptor device being adapted to be inserted into the receptacle, the adaptor device in the inserted state forming at least one lateral guiding surface facing the clamping member, the at least one guiding surface extending in the longitudinal direction and in the clamping position bordering at least the clamping space below the clamping member in the clamping direction.

By the adaptor device having such a shape, a strength member with a smaller diameter no longer has the possibility to escape the friction lock created by the pressure in the clamping space between the clamping member and the inner surface of the receptacle by slipping to the side. In this way, a secure connection between the clamp terminal and a cable with a small diameter is assured during clamping and the entire lifetime of the clamp terminal.

The solution according to the invention can be combined as desired and further improved by the further following developments that are advantageous on their own, in each case, and may be randomly combined.

In a preferential embodiment of the invention, the adaptor device is made from a material that shows little elasticity. Such a material could for example be a metal. However, as metals are difficult to process, a plastic material might be preferred in many cases.

In an advantageous development of the invention, the adaptor device has two parts, each part extending in the longitudinal direction and having a guiding surface. For example, if the receptacle is cylindrical, each part of the adaptor device has the shape of a segment of a cylinder. Such a design is easy to manufacture and thus cheap. However, this simple design still has the desired effect of limiting the space in the receptacle available for the strength member.

In another advantageous development of the invention, the adaptor device extends into the clamping space below a clamping member in the clamping direction. This limits the space available for the strength member even more.

In a further advantageous development of the invention, the adaptor device is a single part, comprising two guiding surfaces and a part below the clamping member in the clamping direction, the part below the clamping member connecting the guiding surfaces. As the adaptor device only consists of one single piece, it can be manufactured in one step. By filling out space over which the clamping member does not pass, the strength member has no possibility to escape the friction lock in the clamping space created by the pressure between the clamping member and the inner outline of the receptacle. Hence, the connection between the cable and the crimp terminal is improved. Additionally, by filling out the clamping space below the clamping member, the movement of the clamping member can be reduced to a minimum. For example, the adaptor device might be shaped such that the outer contour of the adaptor device matches the inner contour of the receptacle. However, as a perfect fit might be difficult to achieve and such a perfectly fitting adaptor device might be hard to insert into the volume, the adaptor device can be slightly smaller than the outline of the inner volume of the receptacle.

In another further advantageous development of the invention, the adaptor device is provided with a channel extending in the longitudinal direction for receiving the clamping member, the channel being open at the proximal end, the inner contour of the channel matching the outer contour of the clamping member facing in the clamping direction. Such a design is advantageous, as by matching the inner contour of the channel to the clamping surface of the clamping member, the space between the two can be reduced to a minimum. In the best case, there is no space available between the two if they are pushed against each other.

In an even further advantageous development of the invention, the outer contour of the adaptor device matches the inner contour of the receptacle. For example if the receptacle has a cylindrical inner outline, the adaptor device could have a basically cylindrical outer contour. Such a design gives a stable structure and thus avoids deformations of the adaptor device. However, there can still be free space available either within the adaptor device or in the area between the adaptor device and the receptacle. Such a design with reduced material might be easier to manufacture, cheaper or easier to insert.

In a further advantageous development of the invention, the surface of the adaptor device facing the inner outline of the receptacle of the clamp terminal can provide gripping features, e.g. it can rough or corrugated. As the strength member and the adaptor device are usually only connected to the clamp terminal by a friction lock, such gripping features or a rough surface can help to improve the contact between the adaptor device and the inner outline of the receptacle of the clamp terminal. Thus, the connection between the adaptor device and the clamp terminal is improved. Further, less force might be needed to secure the connection.

These gripping features can protrude from the surface, for example in the form of pins, bumps, ridges or the like. They might be elastic or deflectable. However they could also be stiff.

Such gripping features or such a rough surface can be inherent to the material or the surface can be provided with gripping features or be roughened during the manufacturing of the adaptor device. For example, the surface could be treated mechanically by grinding or scratching. Or the surface could be treated chemically, e.g. by etching. Further, an additional coating layer could be applied to the adaptor device to create a rougher or stickier surface.

In another advantageous development of the invention, the surface of the adaptor device facing the clamping surface of the clamping element can be provided with gripping features, e.g. be rough or corrugated. These gripping features or such a rough surface may improve the friction between the adaptor device and the clamping element, giving a tighter contact between both. Thus, a strength member inserted into the crimp terminal is less likely to slip out of the friction lock.

Again, the surface might be treated by different means. For instance, the surface could have a rough profile on a microscopic scale, obtained by moulding in a rough mould. Plus, the roughness could be achieved in an additional step during or after manufacturing of the adaptor. This could be done mechanically, chemically or otherwise.

In a further advantageous development of the invention, the adaptor device reduces the clamping space to the space below the clamping member in the clamping direction. By not just limiting the space available for the strength member to the clamping space below the clamping member in the clamping direction, but by filling up the entire space outside the clamping space below the clamping member in the clamping direction, the adaptor device has a very stable structure, thus avoiding deformations and possible failure of the clamping mechanism.

A kit for assembling a clamp terminal according to the invention could contain a standard clamp terminal comprising a clamping member, a receptacle and a screw, and an adaptor insertable into the receptacle. Further, a kit for a clamp terminal according to the invention might also contain different adaptors, each adaptor being adapted to mate with a certain diameter of a strength member.

The invention will be described hereinafter in greater detail and in an exemplary manner using advantageous embodiments and with reference to the drawings. The described embodiments are only possible configurations in which, however, the individual features as described above can be provided independently of one another or can be omitted in the drawings.
- Fig. 1: is a partially exploded schematic perspective view of an exemplary embodiment of a clamp terminal according to the invention;
- Fig. 2: is another schematic perspective view of an exemplary embodiment of a clamp terminal according to the invention with a strength member attached;
- Fig. 3: is a schematic perspective view of another exemplary embodiment of a clamp terminal according to the invention.

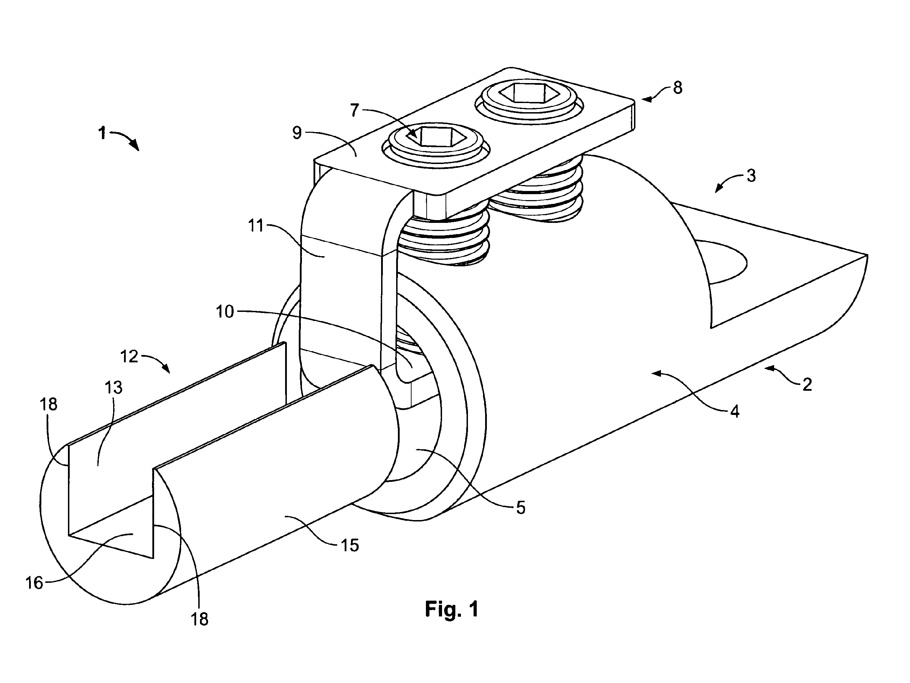

In Fig. 1, a clamp terminal 1 according to the invention is shown. The clamp terminal 1 shown here comprises a body portion 2 which comprises a fixing section 3 and a receptacle 4 that defines a volume 5 inside the receptacle 4. The receptacle 4 generally has a pragmatic shape, the receptacle as shown here has a basically cylindrical shape with a basically cylindrical inner volume. The receptacle 4 is supplied with two threaded screw holes 6 into which screws 7 can be inserted. Further, the clamp terminal 1 comprises a clamping element 8 comprising an upper section 9 with two threaded screw holes 6, a lower section 10 that is opposite the upper section 9 and located in the assembled state at least partially within the volume 5 of the casing 4, and a connecting section 11 connecting the lower section 10 and the upper section 9. The entire clamping element 8 has a U-shape or a horseshoe-like shape in which the lower section 10 and the upper section 9 are facing each other. Such a clamping element 8 can for example be made from a thick strip of metal by bending and drilling at least one hole in one leg. A clamp terminal 1 comprising the body portion 2, the clamping element 8 and the screws 7 is known from the prior art and used for example to connect the strength member of a fibre optic cable to a mechanically stable part of a counter-connector.

According to the invention, an adaptor device 12 is provided that can be inserted into the inner volume 5 of the receptacle 4.

The adaptor device 12 shown in Fig. 1 has a basically cylindrical shape with a channel 13 extending in the longitudinal direction on its top end. The channel 13 extends over the entire length of the adaptor device 12 in the longitudinal direction and has a rectangular shape in a projection along a direction perpendicular to the axis of the cylinder. As the inner volume 5 of the casing 4 is basically cylindrical and the rectangular lower section 10 of the clamping element 8 can move in a vertical direction along the guiding surfaces 18, such a shape is advantageous, as it minimises the volume accessible to the strength member 14 inserted into the clamp terminal 1. Hence, such a strength member 14 can no longer escape from the friction lock created by the lower section 10 of the clamping element 8 and the adaptor device 12, as no space is available.

Usually, the body portion 2, the clamping element 8 and the screws 7 are made from metal, however, as they do not have to be electrically conductive, they can be made from any material that is stable enough. Accordingly, the adaptor device 12 can be made from any material that does not exhibit much elasticity, as such an elasticity might lower the contact force exerted by the screws 7 to the strength member 14.

To further improve the contact between the surface facing the inner outline of the receptacle 15 of the adaptor device 12 and the inner outline of the receptacle, the surface facing the inner outline of the receptacle 15 might be rough or corrugated or have other gripping features. Such a coarse surface can help to improve the contact between the surface facing the inner outline of the receptacle 15 and the inner outline of the receptacle. Thereby, a more reliable connection of the strength member 14 to the body portion 2 of the clamp terminal 1 can be made with less force.

Furthermore, to improve the overall connection between the clamp terminal 1 and the strength member 14, the surface facing the lower section of the clamping element 16 can have gripping features, e.g. it can be rough or corrugated. Such a coarse surface can help to improve the contact between the adaptor device 12, the strength member 14 and the clamping element 8. In particular, the engagement between the adaptor device 12 and the strength member 14 is enhanced. This can give a better connection between the strength member 14 and the clamp terminal 1 with less force.

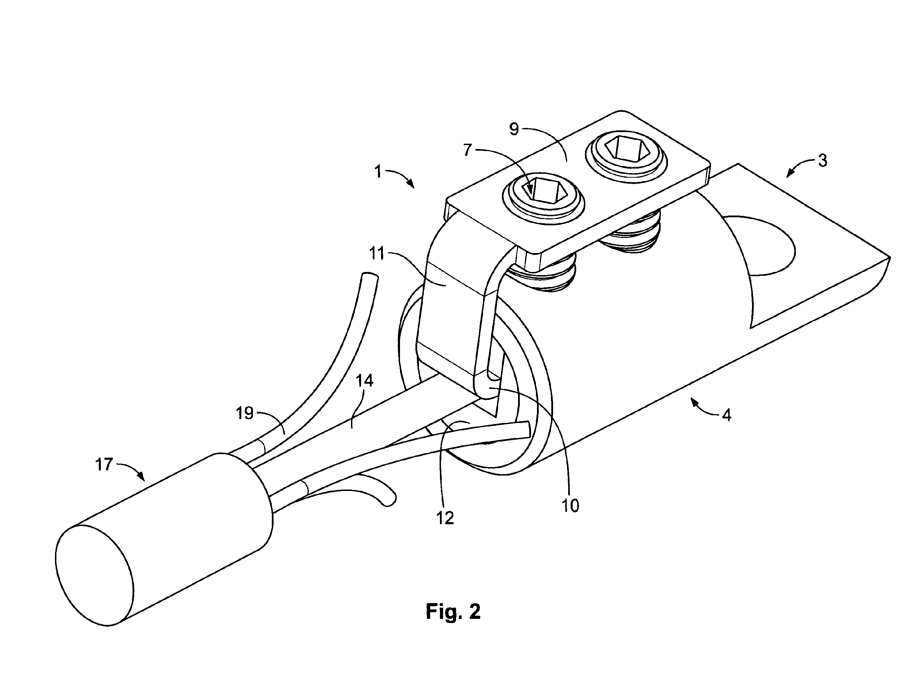

In Fig. 2, the same clamp terminal 1 as depicted in Fig. 1 is shown in an assembled state with a cable 17 attached to the cable assembly 1. The strength member 14 of the cable 17 is inserted in the volume defined by the receptacle and the adaptor device 12, and the clamping element 8 presses the strength member 14 against a clamping surface on the inside of the adaptor device 12 by the screws 7. Therefore, the strength member 14 takes up the mechanical load applied to the cable 17 and the fibre tubes 19 which can transfer data are force-free. It can be seen that the strength member 14 cannot escape from the friction lock created between the lower section 10 of the clamping element 8 and the adaptor device 12, as no free space is available. Unlike a crimped connection, a connection made by clamping is detachable. For example by turning the screws 7 counter-clockwise, the friction lock between the strength member 14 and the clamp terminal 1 can be reduced to such an extent that the strength member 14 can be pulled out of the clamp terminal 1.

In this example, the number of screws 7 is two, however, for an easier operation of the clamp terminal 1 only one screw 7 might be provided if the contact forces exerted by only one screw are sufficient. If higher contact forces are necessary, a higher number of screws 7 might be chosen.

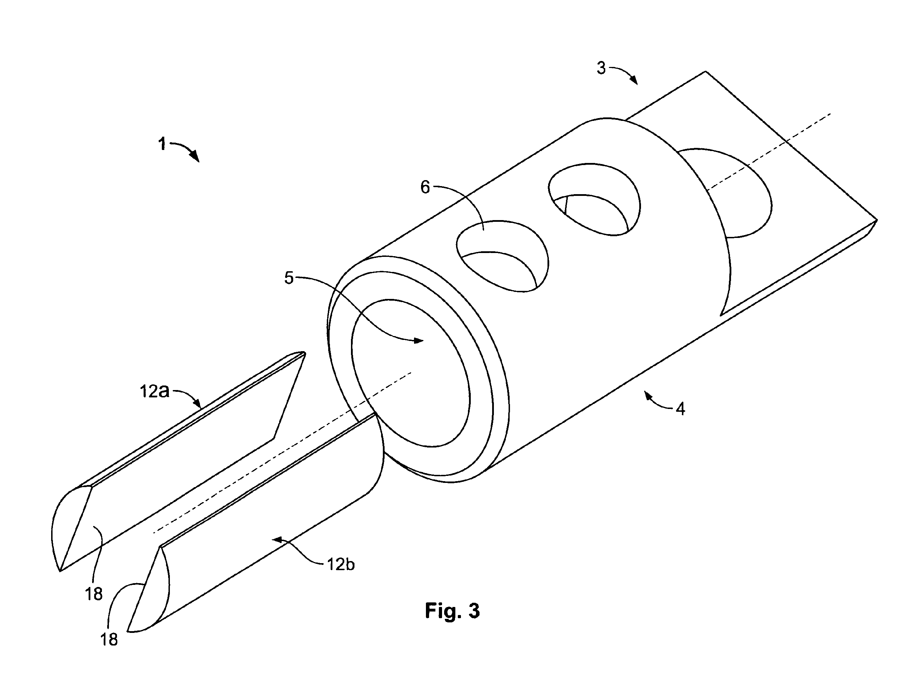

Fig. 3 shows another possible embodiment of a clamp terminal 1 according to the invention. In this case, the adaptor device 12 consists of two parts 12a, 12b. Each of the parts of the adaptor 12a, 12b has the shape of a section of a cylinder and can be inserted into the inner volume 5 of the receptacle of the clamp terminal 1 such that the guiding surface 18 defined by the plane of the cylindrical section is parallel to the direction of the threaded screw holes 6. Preferentially, the height of the cylindrical section corresponds to the maximum distance between the lower section 10 of the clamping element 8 and the inner outline of the receptacle 4. However, it can be smaller as long as the volume taken up by the adaptor device 12 is big enough to prevent the strength member 14 from escaping the friction lock between the lower section 10 of the clamping element 8 and the inner volume 5 of the receptacle 4.

## Claims

1. Clamp terminal (1) for clamping a strength member (14) of a cable (17),
the clamp terminal (1) having a basically prismatic receptacle (4), the receptacle (4) extending in a longitudinal direction and being open at at least one proximal end situated in the longitudinal direction,
having a clamping member (8), the clamping member (8) being adapted to be moved in a clamping direction perpendicular to the longitudinal direction to a clamping position, in which the clamping member (8) is located within the receptacle (4),
and having a clamping space being located in the clamping position between the clamping surface of the clamping member (8) and an inner surface of the receptacle (4)
**characterised by**
an adaptor device (12), the adaptor device (12) being adapted to be inserted into the receptacle (4), the adaptor device (12) in the inserted state forming at least one lateral guiding surface (18) facing the clamping member (8), the at least one guiding surface (18) extending in the longitudinal direction and in the clamping position bordering the clamping space at least below the clamping member in the clamping direction.

2. Clamp terminal (1) according to claim 1 **characterised in that** the adaptor device (12) extends into the clamping space below the clamping member (8) in the clamping direction.

3. Clamp terminal (1) according to claim 1 or 2 **characterised in that** the adaptor device (12) is a single part, comprising two guiding surfaces (18) and a part below the clamping member in the clamping direction, the part below the clamping member connecting the guiding surfaces (18).

4. Clamp terminal (1) according to any one of claims 1 to 3 **characterised in that** the adaptor device (12) is provided with a channel extending in the longitudinal direction for receiving the clamping member (8), the channel being open at the proximal end, the inner contour of the channel matching the outer contour of the clamping member (8) facing in the clamping direction.

5. Clamp terminal (1) according to any one of claims 1 to 4 **characterised in that** the outer contour of the adaptor device (12) matches the inner contour of the receptacle (4).

6. Clamp terminal (1) according to any one of claims 1 to 5 **characterised in that** the surface of the adaptor device (12) facing the inner outline of the receptacle (4) provides gripping features.

7. Clamp terminal (1) according to any one of claims 1 to 6 **characterised in that** the surface of the adaptor device (12) facing the clamping surface of the clamping member (8) provides gripping features.

8. Clamp terminal (1) according to any one of claims 1-7 **characterised in that** the adaptor device (12) reduces the clamping space to the space below the clamping member (8) in the clamping direction

9. Kit for assembling a clamp terminal (1) according to any one of claims 1 to 8.
